# EUROPEAN PATENT APPLICATION

(11) **EP 4 703 679 A1**
(43) Date of publication of application: **04.03.2026**
(21) Application number: 24196556.5
(22) Date of filing: 26.08.2024
(51) Int. Cl.: G01C 15/00

(54) **ROTARY LASER LEVEL WITH IMPROVED TILT DETECTION**

(71) Applicant: Hilti Aktiengesellschaft, 9494 Schaan (LI)
(72) Inventor: Sanchen, Guenter, 9472 Grabs (CH); Eyrich, Petra, 9443 Widnau (CH)
(74) Representative: Hilti Aktiengesellschaft Corporate Intellectual Property

(57) **Abstract**

A rotary laser level, comprising a laser core module, a tilting device, a tilt detecting device (23), and a holding device (24). The tilt detecting device (23) includes a first level sensor (33) configured to indicate a tilting of the laser core module around a first tilting axis and a second level sensor (34) configured to indicate a tilting of the laser core module around a second tilting axis, wherein the first level sensor (33) and second level sensor (34) are designed to detect balance with respect to a local gravity vector. The holding device (24) includes an optical holder (40), a first casing (41) configured to hold the first level sensor (33) and connected to the optical holder (40) by a first bottleneck (45), and a second casing (42) configured to hold the second level sensor (34) and connected to the optical holder (40) by a second bottleneck (47).

## Description

The present invention relates to a rotary laser level with improved tilt detection according to the definition of claim 1.

### Background of the invention

A rotary laser level known from prior art includes laser generator emitting a laser beam that is rotated about an axis of rotation thus defining a laser plane. In the rotary laser level, which forms the laser plane by using a laser beam, it is necessary that the rotary laser level is oriented in a horizontal mode in order that the laser plane is oriented essentially perpendicular to a local gravity vector. For this reason, a tilt detecting device is provided inside of the rotary laser level. The rotary laser level is levelled based on results detected by the tilt detecting device, and the rotary laser level is operated in horizontal mode.

When a laser plane is formed by using a laser beam that is rotated around an axis of rotation, it can be required to have not only a laser plane that is horizontally oriented, but also a laser plane that is vertically oriented. The rotary laser level can be laid on its handles and a laser plane that is vertically oriented can be formed. In this case, it is necessary to have a tilt detecting device, which can detect tilting of the rotary laser level at two orientations, the horizontal mode and the vertical mode.

In the rotary laser level, which forms the laser plane by rotating a laser beam about an axis of rotation, rotating means are necessary, which create a high amount of heat. The heat created by the rotating means and electronical components that are continuously used during operating the rotary laser level, can interfere with the tilt detecting device of the rotary laser level and can reduce the accuracy of tilt detecting caused by temperature effects.

### Summary of the invention

Therefore, what is desired is to provide a tilt detecting device for a rotary laser level, which is less effected by heat that is created in the rotary laser level.

These objectives are achieved by realizing the features of the independent claims. Features which further develop the invention in an advantageous manner are described in the dependent claims.

According to an aspect of the present invention, the first casing is connected to the optical holder by a first bottleneck and the second casing is connected to the optical holder by a second bottleneck. The first bottleneck is a connecting element between the optical holder and the first casing that has a reduced size, and by connecting the first casing via the first bottleneck to the optical holder, the heat can dissipate in a controlled and preferred manner such that the first casing is heated symmetrically. The second bottleneck is a connecting element between the optical holder and the second casing that has a reduced size, and by connecting the second casing via the second bottleneck to the optical holder, the heat can dissipate in a controlled and preferred manner such that the second casing is heated symmetrically.

When the heat that is created in the rotary laser level can dissipate in a controlled and preferred manner to the first casing holding the first level sensor and to the second casing holding the second level sensor, the tilt detecting device of the rotary laser level is less effected by heat and can detect the tilting of the laser core module about the first tilting axis and about the second tilting axis more precisely.

Preferably, the first bottleneck has a first mid plane that is essentially coplanar to a first center plane of the first level sensor and/or the second bottleneck has a second mid plane that is essentially coplanar to a second center plane of the second level sensor. The first center plane of the first level sensor is defined as center of the first level sensor that defines balance of the first level sensor with respect to the local gravity vector in the horizontal mode of the rotary laser level, and the second center plane of the second level sensor is defined as center of the second level sensor that defines balance of the second level sensor with respect to the local gravity vector in the horizontal mode of the rotary laser level.

Preferably, the first bottleneck has a first sectional area that is essentially mirror symmetrical to the first mid plane and/or the second bottleneck has a second sectional area that is essentially mirror symmetrical to the second mid plane. Using a first bottleneck with a first sectional area that is essentially mirror symmetrical to the first mid plane of the first bottleneck allows that the first casing is heated symmetrically, and the head can dissipate in a controlled and preferred manner, and using a second bottleneck with a second sectional area that is essentially mirror symmetrical to the second mid plane of the second bottleneck allows that the second casing is heated symmetrically and the head can dissipate in a controlled and preferred manner.

In a preferred embodiment, the optical holder, the first casing, the first bottleneck, the second casing and the second bottleneck are integrated in a monolithic part. A monolithic part that integrates the optical holder, the first casing, the first bottleneck, the second casing and the second bottleneck can reduce negative temperature effects that can be created by separate parts.

Preferably, the monolithic part is a pressure die casting part. Pressure die casting allows to create a monolithic part that integrates the optical holder, the first casing, the first bottleneck, the second casing and the second bottleneck.

In a preferred embodiment, the rotary laser level is configured to be operated in a vertical mode and the tilt detecting device further includes a third level sensor configured to indicate a tilting of the laser core module around a third tilting axis, the third level sensor being designed to detect balance with respect to the local gravity vector in the vertical mode of the rotary laser level.

Preferably, the holding device further includes a third casing configured to hold the third level sensor and the third casing is connected to the optical holder by a third bottleneck. By connecting the third casing by the third bottleneck to the optical holder, the heat can dissipate in a controlled and preferred manner such that the third casing is heated symmetrically.

When the heat that is created in the rotary laser level can dissipate in a controlled and preferred manner to the third casing holding the third level sensor, the tilt detecting device of the rotary laser level is less effected by heat and can detect the tilting of the laser core module more precisely.

Preferably, the third bottleneck has a third mid plane that is essentially coplanar to a third center plane of the third level sensor. The third center plane of the third level sensor is defined as center of the third level sensor that defines balance of the third level sensor with respect to the local gravity vector in the vertical mode of the rotary laser level.

Preferably, the third bottleneck has a third sectional area that is essentially mirror symmetrical to the third mid plane. Using a third bottleneck with a third sectional area that is essentially mirror symmetrical to the third mid plane of the third bottleneck allows that the third casing is heated symmetrically.

In a preferred embodiment, the optical holder, the first casing, the first bottleneck, the second casing, the second bottleneck, the third casing and the third bottleneck are integrated in a monolithic part. A monolithic part that integrates the optical holder, the first casing, the first bottleneck, the second casing, the second bottleneck, the third casing and the third bottleneck can reduce negative temperature effects that can be created by separate parts.

Preferably, the monolithic part is a pressure die casting part. Pressure die casting allows to create a monolithic part that integrates the optical holder, the first casing, the first bottleneck, the second casing, the second bottleneck, the third casing and the third bottleneck.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIG. 1: shows a rotary laser level according to the present invention,
- FIGS. 2A, B: show the rotary laser level of FIG. 1 in a horizonal mode (FIG. 2A) and in a vertical mode (FIG. 2B),
- FIG. 3: shows a laser generator of the rotary laser level of FIG. 1, the laser generator including a laser unit, a tilting device, a tilt detecting device and a holding device,
- FIGS. 4A, B: show the laser generator of FIG. 3 in a side view (FIG. 4A) and in view from below (FIG. 4B),
- FIG. 5: shows the tilt detecting device and the holding device of the laser generator of FIG. 3 in a perspective view, and
- FIGS. 6A, B: show the tilt detecting device and the holding device of FIG. 5 in a top view (FIG. 6A) and in a side view (FIG. 6B).

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms.

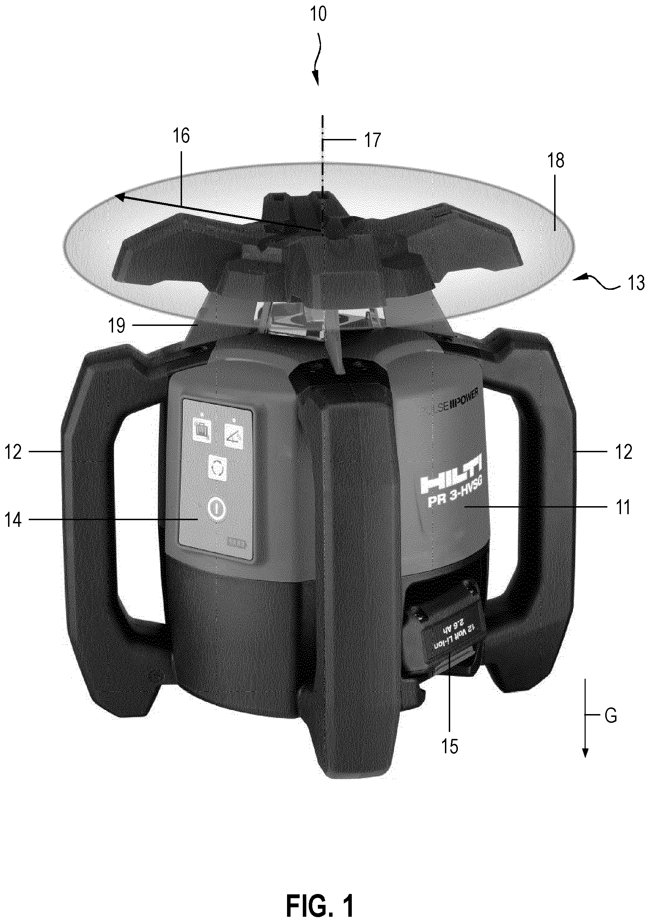

**FIG. 1** shows a rotary laser level **10** according to the present invention. The rotary laser level 10 includes a housing **11,** a plurality of handles **12** connected to the housing 11, a rotating head **13** connected to the housing 11, a laser generator (not shown) arranged in the housing 11, an input device **14,** and a battery pack **15** configured to power the rotary laser level 10.

The laser generator emits a laser beam **16** that is rotated about an axis of rotation **17** thus defining a laser plane **18.** The rotary laser level 10 is levelled to enable that the laser plane 18 is oriented essentially perpendicular to a local gravity vector G.

In the exemplary version of FIG. 1, the rotary laser level 10 includes four handles 12 and the rotating head 13 includes four legs and four side windows arranged between the legs. In other versions, the rotary laser level 10 may have a different number of handles 12 and the rotating head 13 may have a different number of legs and side windows.

The input device 14 is arranged in the housing 11 and includes a plurality of buttons to operate the rotary laser level 10. Alternatively, or additionally, the rotary laser level 10 may be paired with a remote controller and operated by the remote controller via a wireless connection, such as Bluetooth, Wi-Fi, or any other wireless connection. Instead of an input device having a plurality of buttons, the input device may have only one button to start the rotary laser level 10.

In the exemplary version of FIG. 1, the battery pack 15 is a power tool battery pack that can also be used to power a power tool, such as a screwdriver, a circular saw, etc. Alternatively, the rotary laser level 10 may be powered by any other power source.

The rotary laser level 10 of FIG. 1 is operable in a first orientation, called horizontal mode, in which a laser plane is generated that is essentially perpendicular to the local gravity vector G. Optionally, the rotary laser level 10 can be operable in a second orientation, called vertical mode, in which a laser plane is generated that is essentially parallel to the local gravity vector G.

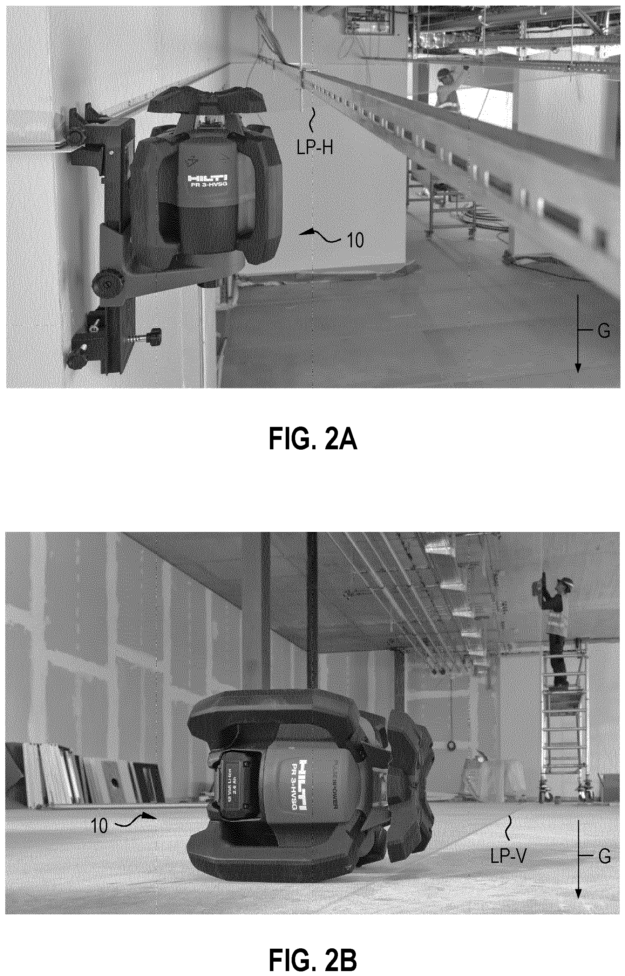

**FIGS. 2A****, B** show the rotary laser level 10 of FIG. 1 arranged in the horizontal mode (FIG. 2A) and in the vertical mode (FIG. 2B).

In the horizontal mode shown in FIG. 2A, the rotary laser level 10 emits the laser beam that defines a horizontal laser plane **LB-H** that is oriented essentially perpendicular to the local gravity vector G.

In the vertical mode shown in FIG. 2B, the rotary laser level 10 emits the laser beam that defines a vertical laser plane **LB-V** that is oriented essentially parallel to the local gravity vector G.

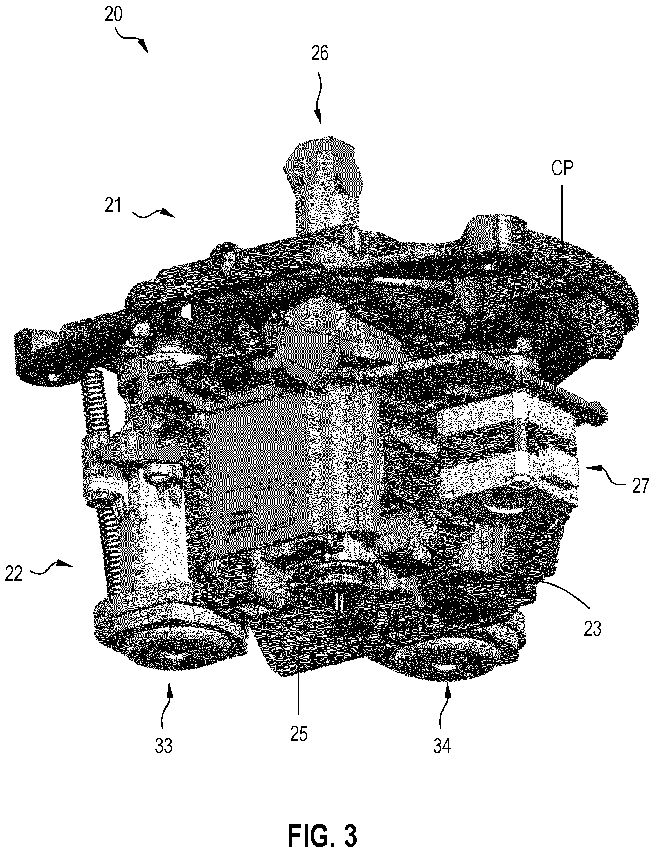

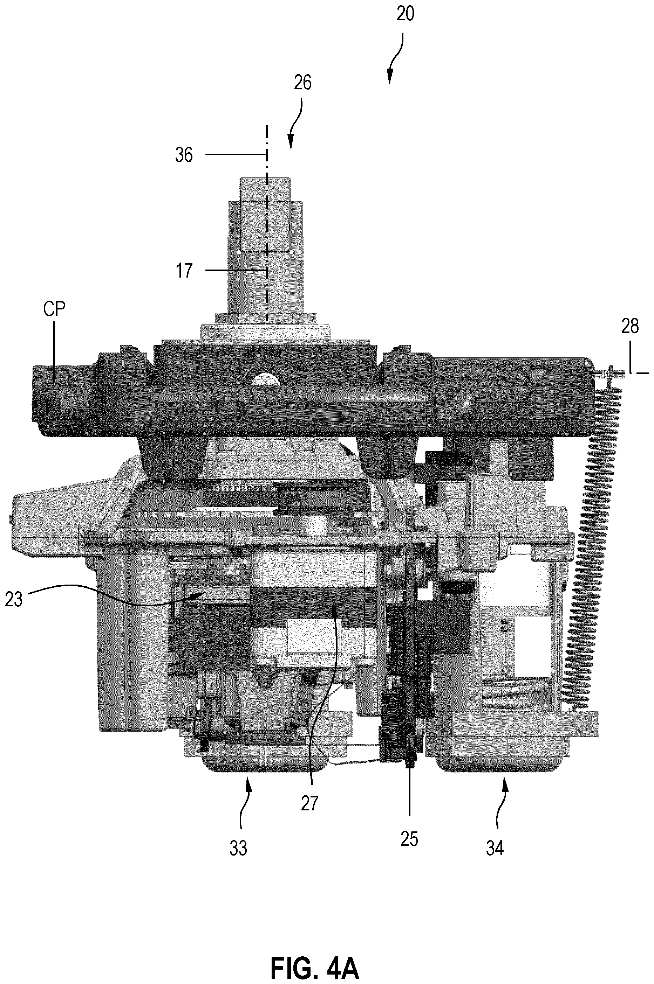

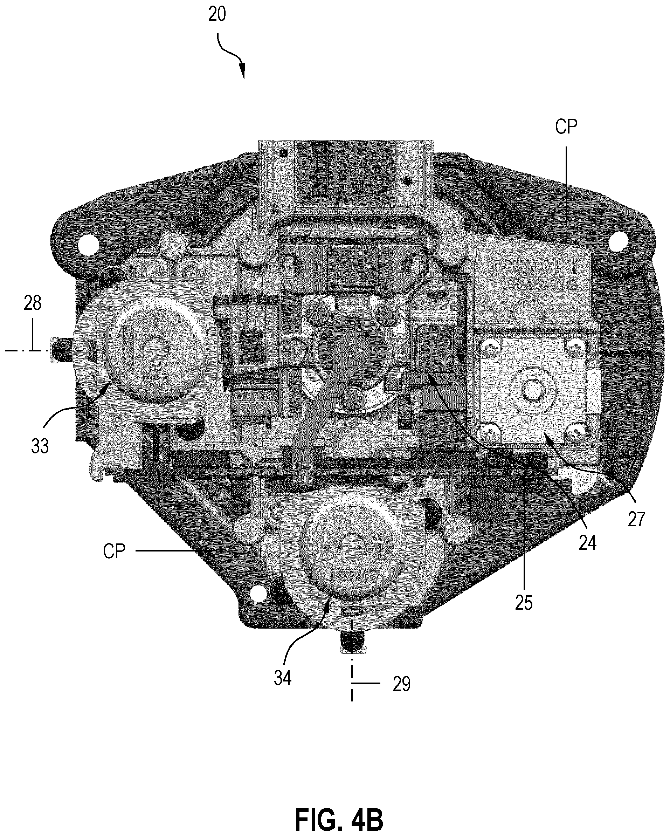

**FIG. 3** shows a laser generator **20** of the rotary laser level 10 in a perspective view, and **FIGS. 4A****, B** show the laser generator 20 of FIG. 3 in a side view (FIG. 4A) and in view from below (FIG. 4B).

The laser generator 20 is arranged in the housing 11 of the rotary laser level 10 and connected in a form-fitted manner to the housing by means of a cardan plate CP. The laser generator 20 comprises a laser core module **21,** a tilting device **22** attached to the laser core module 21, a tilt detecting device **23,** a holding device **24,** and a control unit **25.**

The laser core module 21 includes a laser unit **26** for emitting the laser beam 16 and rotating means **27** for rotating the laser beam 16 around the axis of rotation 17 thus defining the laser plane 18. The laser unit 26 may include a laser diode, a collimator optic and a redirecting optic. The collimator optic can generate a collimated laser beam that is directed along a center line towards the redirector optic. The redirector optic may be in the form of a pentaprism and can change the direction of the collimated laser beam by an angle of 90°. Since the redirector optic is rotated about the axis of rotation 17, the laser beam plane 18 is generated, in which the laser beam 16 rotates around the axis of rotation 17.

The tilting device 22 is operable to tilt the laser core module 21 around a first tilting axis **28** and around a second tilting axis **29,** the first tilting axis 28 and second tilting axis 29 being preferably perpendicular to each other. To tilt the laser core module 21 around the first tilting axis 28, the tilting device 22 can include a first tilting motor **30,** and to tilt the laser core module 21 around the second tilting axis 29, the tilting device 22 can include a second tilting motor **31.**

The tilt detecting device 23 includes a first level sensor **33** that is configured to indicate a tilting of the laser core module 21 around the first tilting axis 28, and a second level sensor **34** that is configured to indicate a tilting of the laser core module 21 around the second tilting axis 29. The first level sensor 33 and second level sensor 34 are designed to detect balance with respect to the local gravity vector G in the horizontal mode of the rotary laser level 10.

In the exemplary version, the rotary laser level 10 is also operable in the vertical mode. To detect the tilting of the laser core module 21 in the vertical mode, the tilt detecting device 23 further includes a third level sensor **35** that is configured to indicate a tilting of the laser core module 21 around a third tilting axis **36.** The third level sensor 36 is designed to detect balance with respect to the local gravity vector G in the vertical mode of the rotary laser level 10.

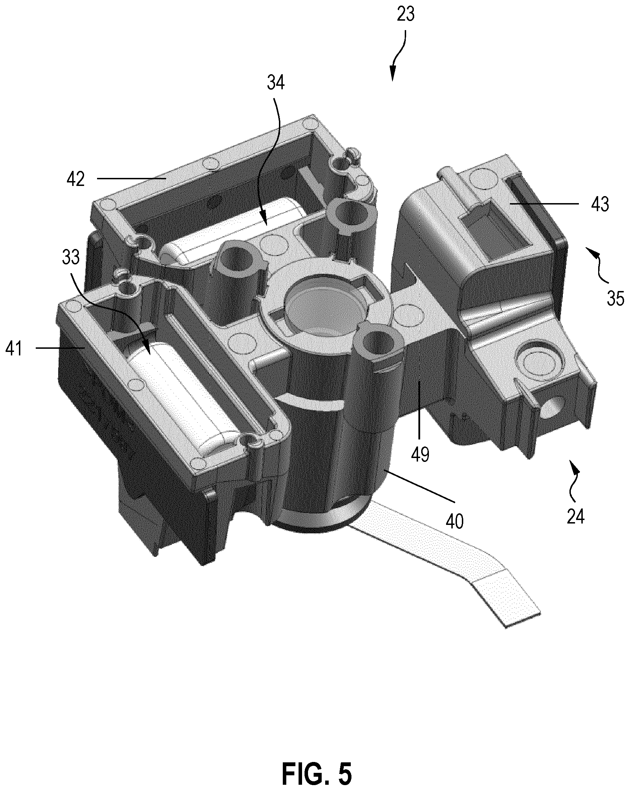

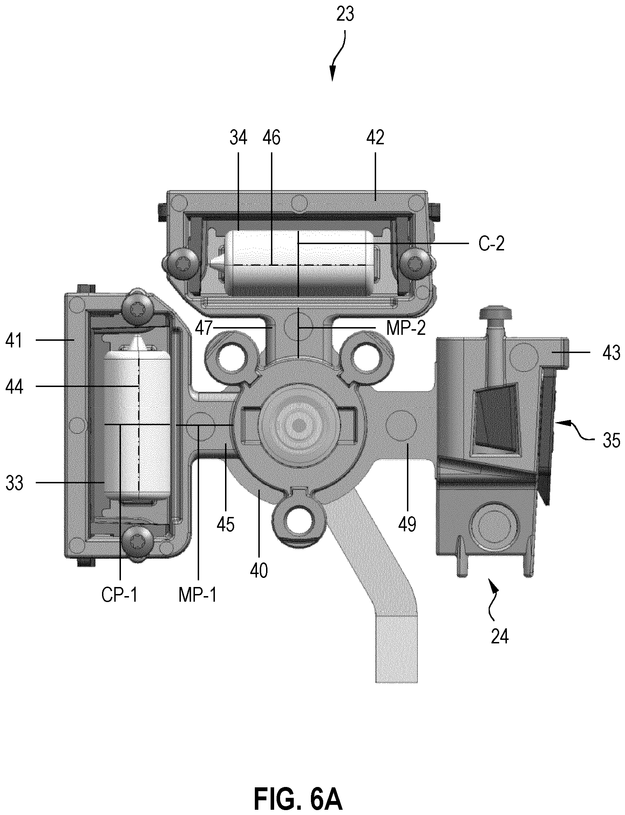

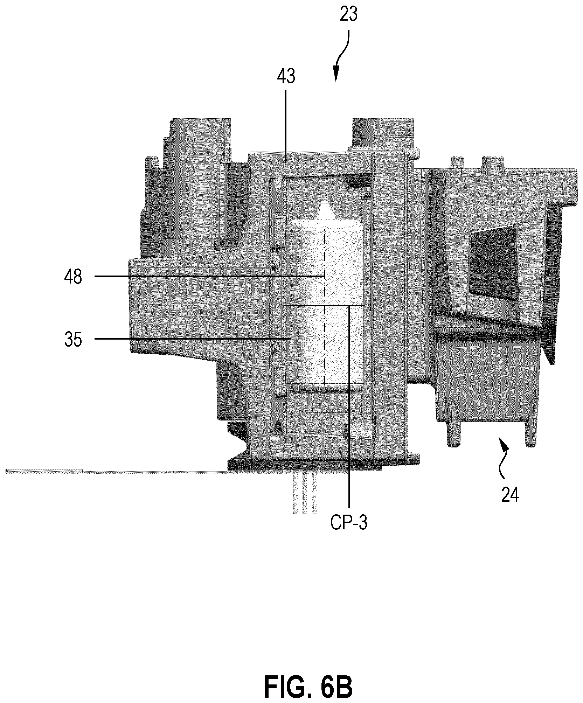

**FIG. 5** shows the tilt detecting device 23 and the holding device 24 of the laser generator 20 in a perspective view, and **FIGS. 6A****, B** show the tilt detecting device 23 and the holding device 24 of FIG. 5 in a top view (FIG. 6A) and in a side view (FIG. 6B).

The holding device 24 includes an optical holder **40** configured to hold the laser unit 26, a first casing **41** configured to hold the first level sensor 33 and a second casing **42** configured to hold the second level sensor 34. When the rotary laser level 10 is also operable in the vertical mode, the holding device 24 also includes a third casing **43** configured to hold the third level sensor 35. In the exemplary version of FIG. 5, the optical holder 40, the first casing 41, the second casing 42 and the third casing 43 are integrated in a monolithic part.

In the exemplary version, the first level sensor 33, the second level sensor 34 and also the third level sensor 35 are provided as bubble vial sensors or spirit vials with a liquid in a receptacle. For the purposes of this invention, the first, second and third level sensor 33, 34, 35 are not necessarily provided as tilt sensors that can measure inclinations over a large measurement range, but as level sensors with highly precise reading of deviations from their balance with respect to gravity with a typical measurement range of about 1° or less tilt deviating from balance.

For precise, automated level measurements and adjustments it is preferred that the first level sensor 33, the second level sensor 34 and also the third laser sensor 35 are provided as level sensor with an opto-electronic readout system (not shown). The opto-electronic readout system may comprise a light source, preferably a laser diode or a light-emitting diode, illuminating the liquid enclosed together with the bubble in the level sensor. The light passing through the level sensor and being deviated in different manners by regions filled with liquid and regions occupied by the bubble in the level sensor is detected by a light-sensitive device, such as a photodiode, a one- or two-dimensional diode or a CCD array capable of detecting deviations from a symmetric distribution of the transmitted light. Any deviation from a symmetric distribution of the transmitted light may be scaled according to a requested resolution.

The first level sensor 33 has an elongate, barrel-type shape with a first longitudinal axis **44,** corresponding to the sensor orientation of rotational sensitivity, oriented perpendicular to the first tilting axis 28. The first casing 41, that is configured to hold the first level sensor 33, is connected to the optical holder 40 by a first bottleneck **45.** The first bottleneck 45 is a connecting element that has a reduced size, and by connecting the first casing 41 via the first bottleneck 45 to the optical holder 40, the heat can dissipate in a controlled and preferred manner such that the first casing 41 is heated symmetrically and the first level sensor 33 can detect the tilting of the laser core module 21 about the first tilting axis 28 more precisely.

The first bottleneck 45 can have a first mid plane **MP-1** that is essentially coplanar to a first center plane **CP-1** of the first level sensor 33. The first center plane CP-1 of the first level sensor 33 is defined as center of the first level sensor 33 that defines balance of the first level sensor 33 with respect to the local gravity vector in the horizontal mode. Preferably, the first bottleneck 45 can have a first sectional area that is essentially mirror symmetrical to the first mid plane MP-1.

The second level sensor 34 has an elongate, barrel-type shape with a second longitudinal axis **46,** corresponding to the sensor orientation of rotational sensitivity, oriented perpendicular to the second tilting axis 29. The second casing 42, that is configured to hold the second level sensor 34, is connected to the optical holder 40 by a second bottleneck **47.** The second bottleneck 47 is a connecting element that has a reduced size, and by connecting the second casing 42 via the second bottleneck 47 to the optical holder 40, the heat can dissipate in a controlled and preferred manner such that the second casing 42 is heated symmetrically and the second level sensor 34 can detect the tilting of the laser core module 21 about the second tilting axis 29 more precisely.

The second bottleneck 47 can have a second mid plane **MP-2** that is essentially coplanar to a second center plane **CP-2** of the second level sensor 34. The second center plane CP-2 of the second level sensor 34 is defined as center of the second level sensor 34 that defines balance of the second level sensor 34 with respect to the local gravity vector in the horizontal mode. Preferably, the second bottleneck 47 can have a second sectional area that is essentially mirror symmetrical to the second mid plane MP-2.

In the exemplary version, the rotary laser level 10 is also operable in the vertical mode and the tilt detecting device 23 further includes the third level sensor 35. The third level sensor 35 has an elongate, barrel-type shape with a third longitudinal axis **48,** corresponding to the sensor orientation of rotational sensitivity, oriented perpendicular to the third tilting axis 36. The holding device 24 further includes the third casing 43 that is configured to hold the third level sensor 35 and the third casing 43 is connected to the optical holder 40 by a third bottleneck **49.** The third bottleneck 49 is a connecting element that has a reduced size, and by connecting the third casing 43 via the third bottleneck 49 to the optical holder 40, the heat can dissipate in a controlled and preferred manner such that the third casing 43 is heated symmetrically and the third level sensor 35 can detect the tilting of the laser core module 21 about the third tilting axis 36 more precisely.

The third bottleneck 49 can have a third mid plane **MP-3** that is essentially coplanar to a third center plane **CP-3** of the third level sensor 35. The third center plane CP-3 of the third level sensor 35 is defined as center of the third level sensor 35 that defines balance of the third level sensor 35 with respect to the local gravity vector in the vertical mode. Preferably, the third bottleneck 49 can have a third sectional area that is essentially mirror symmetrical to the third mid plane MP-3.

## Claims

1. A rotary laser level (10), comprising:
▪ a laser core module (21) including a laser unit (26) for emitting a laser beam (16) and rotating means (27) for rotating the laser beam (16) around an axis of rotation (17) thus defining a laser plane (18),
▪ a tilting device (22) being operable to tilt the laser core module (21) around a first tilting axis (28) and around a second tilting axis (29),
▪ a tilt detecting device (23) including a first level sensor (33) configured to indicate a tilting of the laser core module (21) around the first tilting axis (28) and a second level sensor (34) configured to indicate a tilting of the laser core module (21) around the second tilting axis (29), the first level sensor (33) and second level sensor (34) being designed to detect balance with respect to a local gravity vector (G), and
▪ a holding device (24) including an optical holder (40) configured to hold the laser unit (26), a first casing (41) configured to hold the first level sensor (33) and a second casing (42) configured to hold the second level sensor (34),
**characterized in that** the first casing (41) is connected to the optical holder (40) by a first bottleneck (45) and the second casing (42) is connected to the optical holder (40) by a second bottleneck (47).

2. The rotary laser level of claim 1, wherein the first bottleneck (45) has a first mid plane (MP-1) that is essentially coplanar to a first center plane (CP-1) of the first level sensor (33) and/or the second bottleneck (47) has a second mid plane (MP-2) that is essentially coplanar to a second center plane (CP-2) of the second level sensor (34).

3. The rotary laser level of claim 2, wherein the first bottleneck (45) has a first sectional area that is essentially mirror symmetrical to the first mid plane (MP-1) and/or the second bottleneck (47) has a second sectional area that is essentially mirror symmetrical to the second mid plane (MP-2).

4. The rotary laser level of any one of claims 1 to 3, wherein the optical holder (40), the first casing (41), the first bottleneck (45), the second casing (42) and the second bottleneck (47) are integrated in a monolithic part.

5. The rotary laser level of claim 4, wherein the monolithic part is a pressure die casting part.

6. The rotary laser level of any one of claims 1 to 5, wherein the rotary laser level (10) is configured to be operated in a vertical mode and the tilt detecting device (23) further includes a third level sensor (35) configured to indicate a tilting of the laser core module (21) around a third tilting axis (36), the third level sensor (35) being designed to detect balance with respect to the local gravity vector (G).

7. The rotary laser level of claim 6, wherein the holding device (24) further includes a third casing (43) configured to hold the third level sensor (35) and the third casing (43) is connected to the optical holder (40) by a third bottleneck (49).

8. The rotary laser level of claim 7, wherein the third bottleneck (49) has a third mid plane (MP-3) that is essentially coplanar to a third center plane (CP-3) of the third level sensor (35).

9. The rotary laser level of claim 8, wherein the third bottleneck (49) has a third sectional area that is essentially mirror symmetrical to the third mid plane (MP-3).

10. The rotary laser level of any one of claims 7 to 9, wherein the optical holder (40), the first casing (41), the first bottleneck (45), the second casing (42), the second bottleneck (47), the third casing (43) and the third bottleneck (49) are integrated in a monolithic part.

11. The rotary laser level of claim 10, wherein the monolithic part is a pressure die casting part.
